## Europäisches Patentamt

(19) **European Patent Office**

**Office européen des brevets**

(11) Publication number: **0 010 377**
**B1**

(12) **EUROPEAN PATENT SPECIFICATION**

(45) Date of publication of patent specification: **06.01.82**

(51) Int. Cl.³: **B 60 T 13/14**

(21) Application number: **79302092.6**

(22) Date of filing: **03.10.79**

(54) Fluid pressure brake booster.

(30) Priority: **18.10.78 GB 4104478**

(43) Date of publication of application:
**30.04.80 Bulletin 80/9**

(45) Publication of the grant of the European patent:
**06.01.82 Bulletin 82/1**

(84) Designated Contracting States:
**BE DE FR GB IT SE**

(56) References cited:
**DE - A - 2 147 121**
**DE - B2 - 2 438 469**
**GB - A - 1 203 889**
**GB - A - 2 003 564**

(73) Proprietor: **AUTOMOTIVE PRODUCTS LIMITED**
**Tachbrook Road**
**Leamington Spa Warwickshire CV31 3ER (GB)**

(72) Inventor: **Parsons, David**
**73 John O'Gaunt Road**
**Kenilworth, Warwickshire (GB)**

Courier Press, Leamington Spa, England.

# Fluid pressure brake booster

This invention relates to vehicle fluid pressure brake boosters of the type interposed between a driver's brake pedal and brake applying means so as to reduce the brake pedal load required for a given vehicle braking effect.

Such fluid boosters include feedback means for developing a brake pedal load substantially proportional to the brake applying force generated by the booster, this provides the vehicle driver with an indication of the braking force developed at the vehicle wheels.

In one known booster, for example as shown in DE—A—2 147 121, the feedback means comprise a reslient member interposed between the necessary boost piston and booster output push rod for transferring a fixed proportion of the brake applying force developed by the booster to the brake pedal. Other boosters, for example as shown in US—A—3 942 326, have feedback means which develop a brake pedal load in accordance with the fluid operating pressure within the booster.

One problem with fluid pressure boosters is that stiction is caused between the booster piston and the co-operating booster bore by the necessary fluid seals which are under pressure from the fluid power source. This may result in a high brake pedal load to initiate booster piston movement, and may also act against the effect of the usual boost piston return spring to delay or prevent complete return of the piston to the inactive position.

It is an object of the present invention to provide a booster which overcomes the aforementioned problem.

According to the invention there is provided a hydraulic booster, for a vehicle braking system having a fluid pressure power source, the booster having a boost piston, contrll means for governing a differential pressure across the boost piston in accordance with the braking effort required and means arranged so as, in use, to feedback to a brake pedal a load proportional to the brake applying force generated by the booster, characterised thereby that the boost piston has an area arranged to be exposed to fluid pressure from the power source so that, in use, the piston is constantly urged towards a return position by the effect of the fluid pressure on said area.

Preferably the boost piston area arranged to be exposed to fluid pressure is an annulus formed at a radial step in the outside diameter of the boost piston.

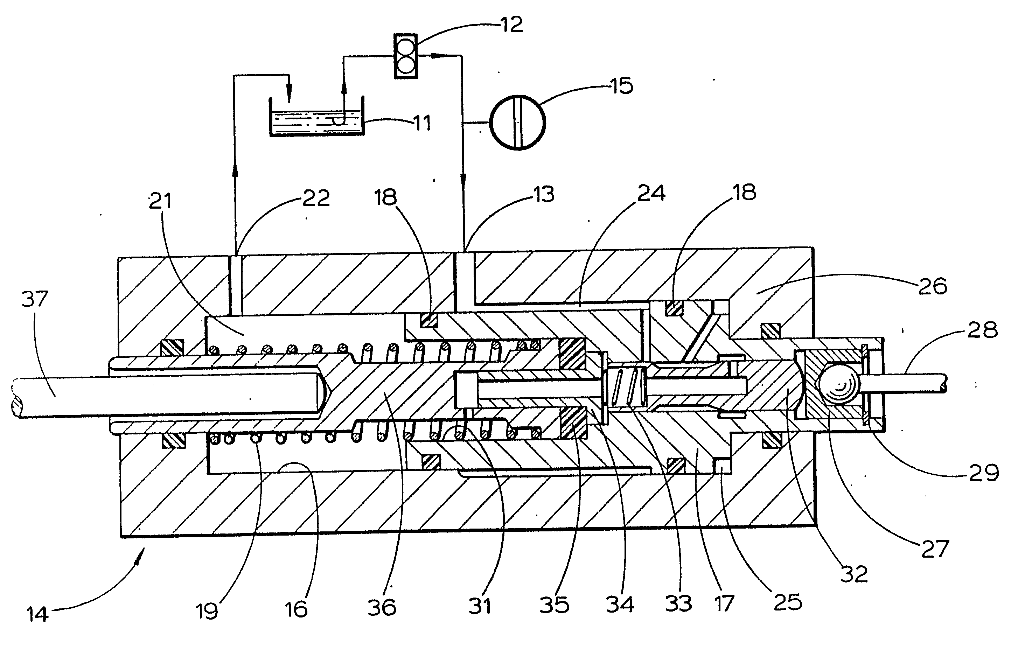

Other features of the invention are included in the following description of a preferred embodiment shown, by way of example, on the accompanying drawing which is a schematic representation of a suitable hydraulic brake circuit and incorporates a transverse section through a brake booster valve according to the preferred embodiment.

The apparatus to be described is intended for fitting in a conventional motor vehicle hydraulic brake circuit between a driver's brake pedal and a brake master cylinder.

Referring to the drawings, on which arrows indicate the direction of hydraulic fluid flow there is shown a reservoir 11 from which a pump 12 delivers hydraulic fluid under pressure to the inlet port 13 of a brake booster 14. An hydraulic accumulator 15 is provided between the pump 12 and the port 13.

The booster 14 comprises a double diameter closed cylinder whose internal bore 16 houses an annular boost piston 17 for relative axial movement. The usual fluid seals 18 are provided between the piston 17 and the bore 16.

A return spring 19 biases the piston 17 to the rest position, as shown. The return spring chamber 21 is connected through a drain port 22 to the fluid reservoir 11.

The inlet port 13 opens into an annular chamber 24 defined by the step in the bore 16 and in the piston 17. An annular boost chamber 25, of larger cross-sectional area than chamber 24, is formed adjacent the end wall 26 of the larger diameter portion of the bore 16.

A co-axial annular boost piston extension passes through the end wall 26 and houses a socket 27 which receives a thrust rod 28 for connection to an operator's brake pedal (not shown).

A circlip 29 retains the socket 27 for limited axial movement in a larger diameter end portion of the boost piston bore 31.

A next smaller diameter portion of the bore 31 houses a control piston 32 which is biased against the socket 27 by a light spring 33 acting betwen the piston 32 and an annular reaction plunger 34 supported in a next larger portion of the bore 31.

A further largest portion of the bore 31 houses an annular resilient reaction member 35 whose bore is supported by a cylindrical extension of the reaction plunger 34. The plunger 34 has limited axial free movement in its piston support bore, as shown.

A generally dumbell shaped link 36 has one end supported in the largest portion of the bore 31 adjacent the reaction member 35, and the other end supported in an aperture through the end wall of the smaller diameter portion of the bore 16.

The link 36 houses a push rod 37 for connection to a conventional master cylinder (not shown).

The return spring 19 acts through the link 36 and reaction member 35 on the boost piston 17.

In the inactive position, as shown, fluid passages formed in the boost piston 17, control piston 32, reaction plunger 34 and link 36 connect the boost chamber 25 with spring chamber 21 and hence the fluid reservoir 11. The inlet port 13 is isolated from the boost chamber 25 by a land of the control piston 32 as shown.

The operation of the brake booster valve 14 is as follows:—

As depicted, the vehicle brake pedal, and hence the brake booster, is unactivated and pressurised fluid at the inlet port 13 is acting in the fluid chamber 24 on the boost piston 17 to generate a hydraulic piston return force in assistance to the mechanical force from the return spring 19.

Application of the driver's brake pedal causes the socket 27 and the control piston 32 to move inward in the boost piston bore 31, against the effect of the light spring 33, to isolate the boost chamber 25 from the spring chamber 21, and hence the reservoir 11. Further travel of the control piston 32 places the inlet port 13 and the boost chamber 25 in fluid communication.

The control piston 32 is now touching but not loading the reaction plunger 34, neither is the socket 27 directly loading the boost piston 17.

As the fluid pressure force in the boost chamber 25 overcomes the hydraulic return force, the spring return force and the seal stiction force on the boost piston 17, the piston moves to apply the brake master cylinder through the reaction member 35, link 36 and push rod 37.

As the vehicle brakes are applied the boost piston 17 progressively compresses the rim of the reaction member 35 and the piston 17 moves inward relatively to the reaction plunger 34 and control piston 32. Consequently the plunger 34 loads the brake pedal thrust rod 28 through the control piston 32 to resist further travel of the brake pedal, the control piston 32 tending to close communication between the inlet port 13 and the boost chamber 25.

Thus the brake applying force generated by the brake booster 14 is transmitted to the brake pedal by the reaction member 35 to produce a proportionate brake pedal load within the operating range of the booster.

Should the brake pedal load applied by the driver exceed that transmitted to the pedal by the reaction member 35 when the boost chamber 25 is at maximum fluid pressure, the excess load will be directly fed from the socket 27 to the boost piston 17 and thence to the brake master cylinder.

On release of the brake pedal the control piston 32 moves under the action of the light spring 33 to isolate the inlet port 13 and connect the boost chamber 25 through the spring chamber 21 to the reservoir 11.

It is desirable that the brake pedal load required to initiate vehicle braking be minimised to achieve proportionality between brake pedal load and the braking force developed at the vehicle wheels over the entire booster operating range.

This booster can be arranged to overcome the master cylinder return spring and brake shoe pull-off springs by increasing the static axial clearance between the control piston 32 and the reaction plunger 34 so that no reaction force is transmitted to the brake pedal until a threshold brake applying force is generated by the booster.

## Claims

1. A hydraulic booster, for a vehicle braking system having a fluid pressure power source (12), the booster having a boost piston (17), control means (32) for governing a differential pressure across the boost piston (17) in accordance with the braking effort required and means (35) arranged so as, in use, to feedback to a brake pedal a load proportional to the brake applying force generated by the booster, characterised thereby that the boost piston (17) has an area arranged to be exposed to fluid pressure from the power source (12) so that, in use, the piston (17) is constantly urged towards a return position by the effect of the fluid pressure on said area.

2. A hydraulic booster according to Claim 1, characterised thereby that the boost piston area arranged to be exposed to fluid pressure is an annulus formed at a radial step in the outside diameter of the boost piston (17).

3. A hydraulic booster according to Claim 1 or Claim 2, characterised thereby that the feedback means (35) is arranged so as, in use, not to transmit a feedback load to the brake pedal during initial generation of brake applying force by the booster and thereafter to transmit an increasing feedback load as a constant proportion of the increasing brake applying force generated by the booster.

4. A hydraulic booster according to any preceding claim, characterised thereby that the feedback means (35) comprise a resilient member.

5. A hydraulic booster according to Claim 4, characterised thereby that the control means (32) includes axial thrust means (34) co-axially supported within the boost piston (17), both axial thrust means (34) and piston contacting respective annular portions of one side of the resilient member (35) whose axially opposed side contacts a brake applying member (36).

6. A hydraulic booster according to Claim 5, characterised thereby that the resilient member (35) is an annular disc housed in the boost piston (17) and supported against radial deformation.

7. A hydraulic booster according to Claim 6, characterised thereby that the internal bore of the resilient member (35) is supported against radial deformation by a cylindrical projection of the axial thrust means (34).

8. A hydraulic booster according to Claim 7, characterised thereby that the cylindrical projection is slidably supported in a bore of the brake applying member (36).

9. A hydraulic booster according to Claim 7 or Claim 8, characterised thereby that the cylindrical projection has a fluid drain passage formed therethrough.

## Patentansprüche

1. Hydraulischer Bremskraftverstärker für eine FahrzeugBremsanlage mit einer Druckmitteldruckquelle (12), bestehend aus einem Kolben (17), aus einer Steuerung (32) für die an dem Kolben (17) anliegende, der jeweils erforderlichen Bremskraft entsprechende Druckdifferenz und aus einer Einrichtung (35), die im Gebrauch des Bremskraftverstärkers auf ein Bremspedal mit einer Last zurückwirkt, die der von dem Bremskraftverstärker erzeugten Bremskraft proportional ist, dadurch gekennzeichnet, daß der Kolben (17) eine dem von der Druckmitteldruckquelle (12) ausgehenden Druckmitteldruck ausgesetzte Fläche aufweist, so daß der Kolben (17) in Gebrauch des Bremskraftverstärkers durch die Einwirkung des Druckmitteldrucks auf diese Fläche ständig in Richtung auf seine Ruhelage gedrückt wird.

2. Hydraulischer Bremskraftverstärker nach Anspruch 1, dadurch gekennzeichnet, daß die dem Druckmitteldruck ausgesetzte Fläche des Kolbens (17) eine von einer radialen Abstufung in Außendurchmesser des Kolbens (17) gebildete Ringfläche ist.

3. Hydraulische Bremskraftverstärker nach Anspruch 1 oder 2, dadurch gekennzeichnet, daß die Einrichtung (35) so eingerichtet ist, daß sie während der Anfangsphase der Erzeugung von Bremskraft durch den Bremskraftverstärker keine auf das Bremspedal zurückwirkende Last und danach eine in konstantem Verhältnis zu der zunehmenden, durch den Bremskraftverstärker erzeugten Bremskraft zunehmende, auf das Bremspedal zurückwirkende Last überträgt.

4. Hydraulischer Bremskraftverstärker nach einem der vorstehenden Ansprüche, dadurch gekennzeichnet, daß die Einrichtung (35) eine federndes Glied aufweist.

5. Hydraulischer Bremskraftverstärker nach Anspruch 4, dadurch gekennzeichnet, daß die Steuerung (32) eine koaxial innerhalb des Kolbens (17) abgestütztes Druckglied (34) enthält und das Druckglied (34) und der Kolben (17) entsprechenden ringförmigen Teilen an einer Seite des federnden Gliedes (35) anliegen, dessen axiale Gegenseite an dem Bremsbetätigungsglied (36) anliegt.

6. Hydraulischer Bremskraftverstärker nach Anspruch 5, dadurch gekennzeichnet, daß das federnde Glied (35) eine in dem Kolben (17) untergebrachte Ringscheibe ist, die gegen radiale Verformung abgestützt ist.

7. Hydraulischer Bremskraftverstärker nach Anspruch 6, dadurch gekennzeichnet, daß die Innenbohrung des federnden Gliedes (35) durch einen zylindrischen Ansatz an dem axialen Druckglied (34) gegen radiale Verformung abgestützt ist.

8. Hydraulischer Bremskraftverstärker nach Anspruch 7, dadurch gekennzeichnet, daß der zylindrische Ansatz in einer Bohrung des Bremsbetätigungsgliedes (36) gleitbeweglich abgestützt ist.

9. Hydraulischer Bremskraftverstärker nach Anspruch 7 oder 8, dadurch gekennzeichnet, daß der zylindrische Ansatz einen diesen durchsetzenden Abflußkanal aufweist.

## Revendications

1. Servo-mécanisme hydraulique pour circuit de freinage de véhicule comprenant une source d'énergie (12) à pression de fluide, le servo-mécanisme comprenant un piston de servo (17), des moyens de commande (32) servant à régler une pression différentielle de part et d'autre du piston de servo (17) en fonction de l'effort de freinage demandé et des moyens (35) agencés de manière à, en utilisation, renvoyer en réaction à une pédale de frein, un effort proportionnel à la force de serrage des freins engendrée par le servo-mécanisme, et étant caractérisé en ce que le piston de servo (17) possède une surface agencée pour être exposée à la pression de fluide de la source d'énergie (12) de sorte qu'en utilisation, le piston (17) est continuellement repoussé vers une position de repos par l'effet de la pression de fluide exercée sur cette surface.

2. Servo-mécanisme hydraulique suivant la revendication 1, caractérisé en ce que la surface du piston de servo agencée pour être exposée à la pression du fluide est un anneau formé par un épaulement radial correspondant à un changement du diamètre extérieur du piston de servo (17).

3. Servo-mécanisme hydraulique suivant la revendication 1 ou 2, caractérisé en ce que les moyens de réaction (35) sont agencés de manière à, en utilisation, ne pas transmettre d'effort de réaction à la pédale de frein, pendant le développement initial d'une force de freinage par le servo-mécanisme et transmettre ensuite un effort de réaction qui croisse comme une proportion constante de la force croissante de freinage engendrée par le servo-mécanisme.

4. Servo-mécanisme hydraulique suivant l'une des revendications précédentes, caractérisé en ce que les moyens de réaction (35) comprennent un organe élastique.

5. Servo-mécanisme hydraulique suivant la revendication 4, caractérisé en ce que les moyens de commande (32) comprennent des moyens de poussée axiale (34) montés coaxialement dans le piston de servo (17), les moyens de poussée axiale (34) et le piston entrant tous deux en contact avec des parties annulaires respectives d'une première face de l'organe élastique (35) dont la face opposée entre en contact avec un organe (36) de serrage des freins.

**0 010 377**

6. Servo-mécanisme hydraulique suivant la revendication 5, caractérisé en ce que l'organe élastique (35) est un disque annulaire logé dans le piston de servo (17) et maintenu contre les déformations radiales.

7. Servo-mécanisme hydraulique suivant la revendication 6, caractérisé en ce que le trou intérieur de l'organe élastique (35) est maintenu contre les déformations radiales par une saillie cylindrique des moyens de poussée axiale (34).

8. Servo-mécanisme hydraulique suivant la revendication 7, caractérisé en ce que la saillie cylindrique est montée coulissante dans un alésage de l'organe (36) de serrage des freins.

9. Servo-mécanisme hydraulique suivant la revendication 7 ou la revendication 8, caractérisé en ce que la saillie cylindrique comporte un passage de vidange du fluide qui la traverse.

0010 377